# EUROPEAN PATENT SPECIFICATION

(11) **EP 2 837 535 B1**
(45) Date of publication and mention of the grant of the patent: **02.11.2016**
(21) Application number: 13180015.3
(22) Date of filing: 12.08.2013
(51) Int. Cl.: B60T 15/36, F16K 17/04, F16K 17/10

(54) **Electro-pneumatic parking brake assembly**
Elektropneumatische Feststellbremse
Ensemble de frein de stationnement électropneumatique

(43) Date of publication of application: 18.02.2015
(73) Proprietor: KNORR-BREMSE Systeme für Nutzfahrzeuge GmbH, 80809 München (DE)
(72) Inventor: Balogh, Levente, 2310 Szigetszentmiklos (HU)

(56) References cited:
- DE-A1- 3 233 782
- DE-A1-102007 061 908
- DE-A1-102011 101 438
- DE-B3-102008 007 877

## Description

### FIELD OF THE INVENTION

The invention relates to an electro-pneumatic parking brake assembly, comprising a brake cylinder which is operated by electro-pneumatic valve means, including a protection valve for providing a bi-stable safe state function, wherein an input port of the protection valve is connected to a supply pressure source, an output port is connected to the brake cylinder and an exhaust port is connected to the ambient pressure.

Electronic solutions to control the parking brake of the commercial vehicles are a new trend in the vehicle system development. Although working mechanisms are only available in the passenger car market, a few solutions of electro-pneumatic parking brakes are already known. One part of them provides stable control by expensive and not durable solution. The other part is more effective, but requires complicate and accurate control to be able to provide stability, or rather works with extra constrains to be able to keep the system in the desired working mode.

In parking brake systems the main requirement is to ensure the so called safe state, meaning park or release, even if failure occurs. This bi-stable property has to be combined with the proportional brake force control and the partly independent control of the trailer service brakes depending of the selected trailer strategy, which can be 'applied trailer service brakes at park' (trailer braked) or 'released trailer service brakes at park' (trailer unbraked).

### BACKGROUND OF THE INVENTION

The document DE 10 2007 061 908 A1 discloses an electro-pneumatic parking brake assembly in that the bi-stability is solved by feedback of the relay output pressure into the relay control pressure via a switch valve which connects the relay output pressure to the relay control pressure port in its uninitiated state. In case of electricity breakdown the switch valve is uninitiated and the actual pressure state is kept. Both trailer strategies are supported.

The patent document DE 10 2008 007 877 B3 relates to an electro-pneumatic parking brake assembly in that the bi-stability is solved by a 3 by 2 emergency valve which is pneumatically controlled by its output pressure supervised by a select-low valve. The said emergency valve controls the pilot port of the relay valve for actuating the brake cylinder beside a service brake function which is provided via a select-high valve. Safe state is ensured in all cases with the restriction that minimal pressure in drive state is limited above zero. Both trailer strategies are also supported.

### BRIEF DESCRIPTION OF THE INVENTION

It is an object of the present invention to provide an electro-pneumatic parking brake assembly, with an accurate and durable bi-stable safe state protection valve.

According to the invention the protection valve is a pivot-controlled bi-stable 3 by 2 valve containing two independently movable spring-retracted pistons, wherein the first piston corresponds to an input valve seat and the second piston corresponds to an exhaust valve seat, and both valve seats are closed together independently of the output pressure at output port if the control piston is charged by a pressure equal or higher than the supply pressure coming in control input port.

Since the protection valve according to the invention provides the bi-stable safe state function for the parking brake without any electronic means it is more durable in contrast to prior art solution. Furthermore, the piston arrangement inside the protection valve provides a compact and low-maintenance valve design.

Still other objects and advantages of the present invention will in part be obvious and will in part be apparent from the specification.

The present invention accordingly comprises the features of construction, combination of elements, and arrangements of parts which will be exemplified in the constructions hereinafter set forth, and the scope of the invention will be indicated in the Claims.

### BRIEF DESCRIPTION OF THE DRAWINGS

The present invention will be described in more detail hereinafter on the basis of the accompanying drawings, wherein:
- Fig. 1: is a sectional view of a pivot-controlled 3 by 2 valve protection valve for providing a bi-stable safe state function,
- Fig. 2: is a schematic diagram of an electro-pneumatic parking brake assembly according to a first embodiment,
- Fig. 3: is a schematic diagram of an electro-pneumatic parking brake assembly according to a second embodiment, and
- Fig. 4: is a schematic diagram of an electro-pneumatic parking brake assembly according to a third embodiment.

### DETAILED DESCRIPTION OF THE DRAWINGS

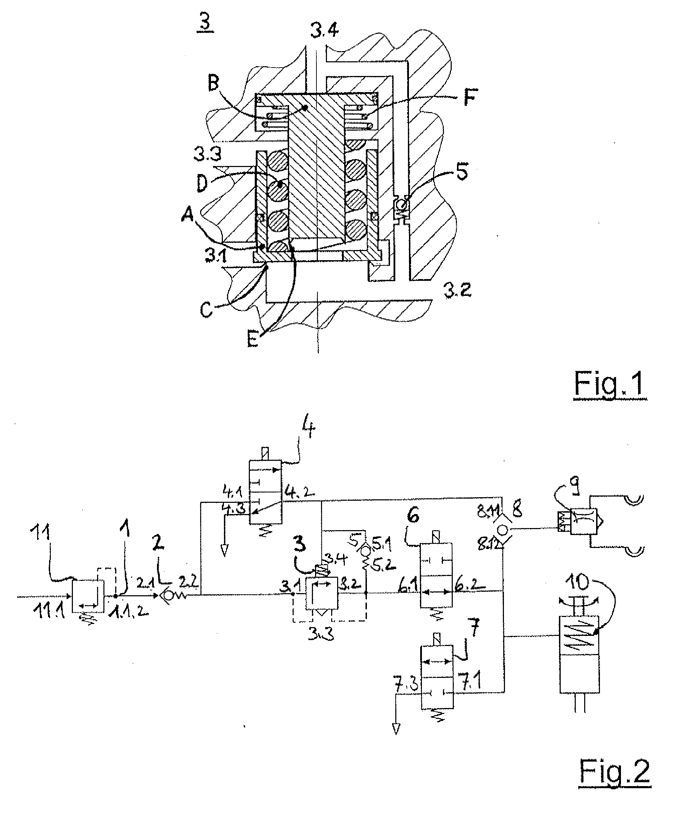

According to **Figure 1** the protection valve 3 of the parking brake assembly comprises an input port 3.1 which is connected to a supply pressure source, an output port 3.2 is connected to the - not shown - brake cylinder and an exhaust port 3.3 which is connected to the ambient pressure. The protection valve 3 is a pivot-controlled via a control input port 3.4.

The protection valve 3 contains two independently movable pistons A and B. The first piston A corresponds to an input valve seat C for supplying the brake cylinder with pressed air. The second piston B corresponds to an exhaust valve seat E for exhausting the brake cylinder.

Both valve seats C and E are closed together independently of the output pressure at output port 3.2 if the control piston B is charged by a pressure equal or higher than the supply pressure coming in control input port 3.4. Therefore the control piston B is spring-retracted by a spring F and the other piston A is spring-retracted by a main spring D which is stronger than the other spring F.

The protection valve 3 is by-passed via a check-valve 5 connecting the control port 3.4 to the output port 3.2 in order to avoid back-flow from the output port 3.2 to the control port 3.4.

According to **Figure 2** in the initial park state of the parking brake the spring brake chambers of the brake cylinder 10 are continuously deflated via the exhaust port 3.3 of the bi-stable, protection valve 3 through the normally open 2 by 2 magnet valve 6. The controlled input of a trailer control valve 9 is also deflated by a select-high valve 8. Its first inlet port 8.11 is deflated by the 3 by 2 control magnet valve 4, and its second inlet port 8.12 is deflated by the same way as the spring brake chamber of the brake cylinder 10 mentioned above.

To perform a test of the park state of the vehicle combination, the spring brake chamber of the brake cylinder 10 is closed first. This is achieved by actuation of the normally open 2 by 2 magnet valve 6. The trailer service brakes are released by the inflation of the trailer control valve 9, actuating the control magnet valve 4 which delivers the supply pressure to the control piston B of the bi-stable protection valve 3. Due to the movement of the control piston B the exhaust valve seat E - as shown in Figure 1 - is closed and the supply pressure is built up at the output port 3.2 of the bi-stable protection valve by the air flow coming from the control 3.4 though the check valve 5. The trailer control valve 9 is inflated through the first inlet port 8.11 of the select-high valve 8. The test is terminated by the release of the 2 by 2, normally open magnet valve 8 and the actuation of the 2 by 2 normally closed magnet valve 7 while the 3 by 2 control magnet valve 4 is released. When the trailer control valve 9 is deflated, the 2 by 2 normally closed magnet valve 7 is released.

To release the parking brake the 2 by 2, normally open magnet valve 6 is actuated. The output port 3.2 of the bi-stable protection valve 3 is inflated by the 3 by 2 control magnet valve 4 through the check valve 5. Reaching the closing pressure of the protection valve 3, its pistons A, B are moving together in the opening position keeping the exhaust valve seat E closed and opening the input valve seat C as shown in Figure 1. When the supply pressure is reached at the output port 3.2 of the protection valve 3, the 3 by 2 control valve 4 is released. The 2 by 2, normally open magnet valve 6 is released in the way that the pressure at the output port 3.2 of the protection valve 3 does not drop under its closing pressure. In this way the protection valve 3 inlet valve seat C is kept open and the spring brake chamber of the brake cylinder 10 is inflated through the 2 by 2, normally open magnet valve 6. The trailer control valve 9 is inflated at the beginning from the output port 4.2 of the 3 by 2 control valve 4 through the first input port 8.11 of the select-high valve 8. When the pressure in the spring brake chamber of the brake cylinder 10 becomes higher than the pressure at the first inlet port 8.11 of the select-high valve 8, its piston closes the first inlet port 8.11 and opens the second inlet port 8.12 which continues the inflation of the trailer control valve 9 from the output port 6.2 of the 2 by 2, normally open magnet valve 6.

To perform proportional adjustment of the parking brake force, the 2 by 2 normally open magnet valve 6 and the 2 by 2 normally closed magnet valve 7 are actuated. As the trailer control valve 9 is connected to the spring brake chamber of the brake cylinder 10 through the second input port 8.12 of the select-high valve 8, the trailer control valve 9 will be controlled by the same pressure as it is in the spring brake chamber of the brake cylinder 10. The output port 3.2 of the protection valve 3 is kept on the supply pressure 1 which ensures that the released safe state is kept even if the power is lost and the magnet valves 4,6,7 are released.

To park the parking brake, the inlet valve seat C of the protection valve 3 is closed by the actuation of the 3 by 2 control magnet valve. The spring brake chamber of the brake cylinder 10 is deflated by the actuation of the 2 by 2, normally closed magnet valve 7. When the minimum pressure is reached, the inlet valve seat C of the protection valve 3 is closed. The 3 by 2, control magnet valve 4 is released and the exhaust valve seat E of the protection valve 3 is opened. The trailer control valve 9 is deflated through the first inlet port 8.11 of the select-high valve 8 and the 3 by 2 control magnet valve 4. When the trailer control valve 9 is deflated, the 2 by 2, normally closed magnet valve 7 is released.

The magnet valve 4 is supplied from the supply pressure source 1 in that it is connected to the output port 11.2 of the pressure limiter 11.

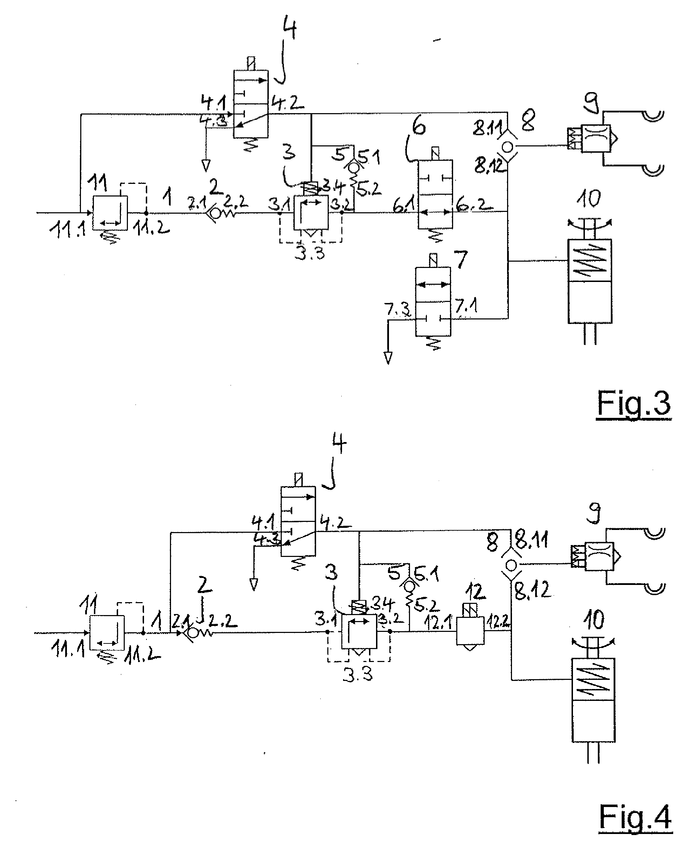

The embodiment of **Figure 3** differs from the foregoing described embodiment in that the magnet valve 4 is supplied from the supply pressure source 1 in that it is connected to the input port 11.1 of the pressure limiter 11.

According to **Figure 4** in the initial park state of the parking brake the spring brake chambers of the brake cylinder 10 are continuously deflated via the exhaust port 3.3 of the bi-stable, protection valve 3 through the electronically controlled membrane valve 12 instead of the magnet valves 6 and 7 as described above.

To perform a test of the park state of the vehicle combination, the spring brake chamber of the brake cylinder 10 is closed first. This is achieved by closing of the membrane valve's 12 input port 12.1. The test is terminated by the opening of the membrane valve's 12 input port 12.1 and the closing of the membrane valve's 12 exhaust port 12.3 while the 3 by 2 control magnet valve 4 is released. When the trailer control valve 9 is deflated, the membrane valve's 12 exhaust port 12.3 is closed.

To release the parking brake the 2 by 2, the membrane valve's 12 input port 12.1 is closed. The membrane valve 12 is released in the way that the pressure at the output port 3.2 of the protection valve 3 does not drop under its closing pressure. When the pressure in the spring brake chamber of the brake cylinder 10 becomes higher than the pressure at the first inlet port 8.11 of the select-high valve 8, its piston closes the first inlet port 8.11 and opens the second inlet port 8.12 which continues the inflation of the trailer control valve 9 from the output port 12.2 of the membrane valve 12.

To perform proportional adjustment of the parking brake force, the membrane valve 12 is switched to the desired hold, load or exhaust state.

To park the parking brake, spring brake chamber of the brake cylinder 10 is deflated by the opening of the membrane valve's 12 exhaust port 12.3. When the trailer control valve 9 is deflated, the membrane valve's 12 exhaust port 12.3 is closed.

It is also to be understood that the following claims are intended to cover all of the generic and specific features of the invention herein described and all statements of the scope of the invention which, as a matter of language, might be said fall there between.

## Claims

1. Electro-pneumatic parking brake assembly, comprising a brake cylinder (10) which is operated by electro-pneumatic valve means, including a protection valve (3) for providing a bi-stable safe state function, wherein an input port (3.1) of the protection valve (3) is connected to a supply pressure source (1), an output port (3.2) is connected to the brake cylinder (10) and an exhaust port (3.3) is connected to the ambient pressure,
**characterised in that** the protection valve (3) is a pivot-controlled bi-stable 3 by 2 valve containing two independently movable spring-retracted pistons (A and B), wherein the first piston (A) corresponds to an input valve seat (C) and the second piston (B) corresponds to an exhaust valve seat (E), and both valve seats (C and E) are closed together independently of the output pressure at output port (3.2) if the control piston (B) is charged by a pressure equal or higher than the supply pressure (1) coming in control input port (3.4).

2. Electro-pneumatic parking brake assembly according to Claim 1,
**characterised in that** the input valve seat (C) opens if the sum of the forces of the input pressure and output pressure is higher than the force of a main spring (D) for pressing the piston (A) in its closed position.

3. Electro-pneumatic parking brake assembly according to Claim 1,
**characterised in that** the input valve seat (C) is closed if both input and output pressure is lower than the protection level defined for the parking brake circuit of the vehicle.

4. Electro-pneumatic parking brake assembly according to Claim 1,
**characterised in that** the pressure on input port (3.1) is not able to open the input valve seat (C) if the input pressure is lower than the maximum supply pressure and the output pressure is lower than maximally allowed parking brake chamber pressure in parked state.

5. Electro-pneumatic parking brake assembly according to Claim 1,
**characterised in that** the exhaust valve seat (E) is open if input valve seat (C) is closed and control piston (B) is controlled by the ambient pressure coming in control input port (3.4).

6. Electro-pneumatic parking brake assembly according to one of the preceding Claims,
**characterised in that** the protection valve (3) is by-passed by a check-valve (5) connecting the control port (3.4) to the output port (3.2) in order to avoid back-flow from the output port (3.2) to the control port (3.4).

7. Electro-pneumatic parking brake assembly according to one of the preceding Claims,
**characterised in that** the control port (3.4) of the protection valve (3) is also supplied by an output (4.2) of a 3 by 2 electro-pneumatic control magnet valve (4), which is supplied from the supply pressure source (1) and which connects its output port (4.3) to the ambient pressure in inactive position.

8. Electro-pneumatic parking brake assembly according to one of the preceding Claims, **characterised in that** the output port (3.2) of the protection valve (3) is connected to an input port (6.1) of a normally-open, high air flow, 2 by 2 magnet valve (6) or to the input port (12.1) of a 3 by 4 membrane valve (12) controlled by magnet valves.

9. Electro-pneumatic parking brake assembly according to Claim 8,
**characterised in that** the output port (6.2) of the normally open, electronically controlled 2 by 2 valve (6) is connected to an input port (7.1) of another, normally closed, high air flow, 2 by 2 magnet valve (7), wherein its output port (7.3) is connected to the ambient pressure.

10. Electro-pneumatic parking brake assembly according to one of the preceding Claims,
**characterised in that** a trailer control valve (9) is connected to the output port (8.2) of a select-high valve (8) of that first input port (8.11) is supplied by the output port (4.2) of the 3 by 2 control magnet valve (4) and the second inlet port (8.12) is supplied from the output port (6.2) of the magnet valve (6) or the output port (12.2) of the membrane valve (12).

## Patentansprüche

1. Elektropneumatische Feststellbremse, welche einen Bremszylinder (10) aufweist, der mittels einer elektropneumatischen Ventileinrichtung betätigt wird, die ein Schutzventil (3) beinhaltet, welches eine bistabile Funktion für einen sicheren Zustand bietet, wobei ein Einlassanschluss (3.1) des Schutzventils (3) mit einer Einspeisedruckquelle (1) verbunden ist, ein Ausgangsanschluss (3.2) mit dem Bremszylinder verbunden ist, und ein Auslassanschluss (3.3) mit dem Umgebungsdruck verbunden ist,
**dadurch gekennzeichnet, dass** das Schutzventil (3) ein mit Vordruck gesteuertes bistabiles 3/2-Ventil ist, das zwei unabhängig voneinander bewegbare, durch Federkraft zurückgezogene Kolben (A und B) enthält, wobei der erste Kolben (A) einem Einlassventilsitz (C) entspricht und der zweite Kolben (B) einem Auslassventilsitz (E) entspricht, und wobei beide Ventilsitze (C und E) unabhängig vom Ausgangsdruck am Ausgangsanschluss zusammen geschlossen werden, wenn der Steuerkolben (B) mit einem Druck beaufschlagt wird, der gleich dem am Steuereinlassanschluss (3.4) eintretenden Einspeisedruck (1) oder höher als dieser ist.

2. Elektropneumatische Feststellbremse nach Anspruch 1, **dadurch gekennzeichnet, dass** der Einlassventilsitz (C) sich öffnet, wenn die Summe der Kräfte des Eingangsdrucks und des Ausgangsdrucks größer ist als die Kraft einer Hauptfeder (D) zum Andrücken des Kolbens (A) in seine geschlossene Position.

3. Elektropneumatische Feststellbremse nach Anspruch 1, **dadurch gekennzeichnet, dass** der Einlassventilsitz (C) geschossen wird, wenn sowohl der Eingangsdruck als auch der Ausgangsdruck niedriger ist als die Schutzgröße, die für den Feststellbremskreis des Fahrzeugs definiert ist.

4. Elektropneumatische Feststellbremse nach Anspruch 1, **dadurch gekennzeichnet, dass** der Druck am Einlassanschluss (3.1) nicht in der Lage ist, den Eingangsventilsitz (C) zu öffnen, wenn der Eingangsdruck niedriger ist als der maximale Einspeisedruck und der Ausgangsdruck niedriger ist als der höchstzulässige Druck der Feststellbremskammer im geparkten Zustand.

5. Elektropneumatische Feststellbremse nach Anspruch 1, **dadurch gekennzeichnet, dass** der Auslassventilsitz (E) offen ist, wenn der Einlassventilsitz (C) geschlossen ist und der Steuerkolben (B) durch den Umgebungsdruck gesteuert wird, der über den Steuereingangsanschluss (3.4) zugeführt wird.

6. Elektropneumatische Feststellbremse nach einem der vorhergehenden Ansprüche, **dadurch gekennzeichnet, dass** das Schutzventil (3) durch ein Rückschlagventil umgangen wird, welches den Steuereingang (3.4) mit dem Ausgangsanschluss (3.2) verbindet, um so ein Zurückfließen vom Ausgangsanschluss (3.2) zum Steueranschluss (3.4) zu vermeiden.

7. Elektropneumatische Feststellbremse nach einem der vorhergehenden Ansprüche, **dadurch gekennzeichnet, dass** der Steueranschuss (3.4) des Schutzventils (3) auch über einen Ausgang (4.2) eines elektromagnetischen 3/2-Steuermagnetventils (4) versorgt wird, welchem von der Einspeisedruckquelle (1) Druck zugeführt wird und welches in inaktiver Stellung seinen Ausgangsanschluss (4.3) mit dem Umgebungsdruck verbindet.

8. Elektropneumatische Feststellbremse nach einem der vorhergehenden Ansprüche, **dadurch gekennzeichnet, dass** der Ausgangsanschluss (3.2) des Schutzventils (3) mit einem Eingangsanschluss (6.1) eines im Normalzustand offenen 2/2-Magnetventils (6) mit hohem Luftdurchgangsstrom oder mit dem Eingangsanschluss (12.1) eines 3/4-Membranventils (12) verbunden ist, das mittels Magnetventilen gesteuert wird..

9. Elektropneumatische Feststellbremse nach Anspruch 8, **dadurch gekennzeichnet, dass** der Ausgangsanschluss (6.2) des im Normalzustand offenen, elektronisch gesteuerten 2/2-Ventils (6) mit einem Eingangsanschluss (7.1) eines weiteren, im Normalzustand geschlossenen 2/2-Magnetventils (7) mit hohem Luftdurchgangsstrom (7.3) verbunden ist, wobei sein Ausgangsanschluss (7.3) mit dem Umgebungsdruck verbunden ist.

10. Elektropneumatische Feststellbremse nach einem der vorhergehenden Ansprüche, **dadurch gekennzeichnet, dass** ein Anhängersteuerventil (9) mit dem Ausgangsanschluss (8.2) eines einen hohen Durchgangsfluss wählenden Ventils (8) verbunden ist, so dass der erste Eingangsanschluss (8.11) mit Druck über den Ausgangsanschluss (4.2) des 3/2-Steuermagnetventils (4) versorgt wird und der zweite Eingangsanschluss (8.12) mit Druck vom Ausgangsanschluss (6.2) des Magnetventils (6) oder vom Ausgangsanschluss (12.2) des Membranventils (12) versorgt wird.

## Revendications

1. Ensemble de frein de stationnement électropneumatique, comprenant un cylindre de frein (10), qui est actionné moyennant un moyen à soupape électropneumatique, qui contient une vanne de protection (3), qui assure une fonction bistable pour un état sûr, dans lequel un port d'entrée (3.1) de ladite vanne de protection (3) est relié à une source de pression d'aspiration (1), un port de sortie (3.2) est relié audit cylindre de frein, et un port d'échappement (3.3) est relié à la pression atmosphérique,
**caractérisé en ce que** ladite vanne de protection (3) est une vanne bistable à 3/2 voies, commandée par une pression de pilotage, qui contient deux pistons (A et B) mobiles indépendamment l'un de l'autre et retirés par une force élastique, dans lequel le premier piston (A) correspond à un siège de soupape d'entrée (C) et le deuxième piston (B) correspond à un siège de soupape de sortie (E), et dans lequel lesdits deux sièges de soupape (C et E) sont fermés ensemble indépendamment de la pression de sortie audit port de sortie, quand ledit piston de commande (B) est alimenté en une pression qui est égale à ou plus haute que la pression d'aspiration (1), qui entre audit port d'entrée de commande (3, 4).

2. Ensemble de frein de stationnement électropneumatique selon la revendication 1, **caractérisé en ce que** ledit siège de soupape d'entrée (C) s'ouvre, quand la somme des forces de la pression d'entrée et la pression de sortie est plus grande que la force d'un ressort principal (d) à porter ledit piston (1) contre sa position fermée.

3. Ensemble de frein de stationnement électropneumatique selon la revendication 1, **caractérisé en ce que** ledit siège de soupape d'entrée (C) est fermé, quand non seulement la pression d'entrée, mais aussi la pression de sortie est plus petite que le niveau de protection défini pour le circuit de freinage de stationnement du véhicule.

4. Ensemble de frein de stationnement électropneumatique selon la revendication 1, **caractérisé en ce que** la pression audit port d'entrée (3.1) n'est pas capable d'ouvrir le siège de soupape d'entrée (C), quand la pression d'entrée est plus petite que la pression d'aspiration maximale et la pression de sortie est plus petite que la pression maximale admissible de la chambre de freinage de stationnement en état stationné.

5. Ensemble de frein de stationnement électropneumatique selon la revendication 1, **caractérisé en ce que** le siège de soupape de sortie (E) st ouvert, quand ledit siège de soupape d'entrée (C) est fermé et quand ledit piston de commande (B) est réglé par la pression atmosphérique, qui est alimentée par ledit port d'entrée de commande (3.4).

6. Ensemble de frein de stationnement électropneumatique selon une quelconque des revendications précédentes, **caractérisé en ce que** ladite vanne de protection (3) est dérivée par un clapet de non-retour (3.4), qui relie ladite entrée de commande (3.4) audit port de sortie (3.2) afin d'éviter, de cette façon, un retour à partir dudit port de sortie (3.2) vers ledit port de commande (3.4).

7. Ensemble de frein de stationnement électropneumatique selon une quelconque des revendications précédentes, **caractérisé en ce que** ledit port de commande (3.4) de ladite vanne de protection (3) est alimenté au plus via une sortie (4.2) d'un électrovanne de commande électromagnétique à 3/2 voies (4), qui est alimentée en pression à partir de ladite source de pression d'aspiration (1) et qui, en position inactive, relie son port de sortie (4.3) à la pression atmosphérique.

8. Ensemble de frein de stationnement électropneumatique selon une quelconque des revendications précédentes, **caractérisé en ce que** ledit port de sortie (3.2) de ladite vanne de protection (3) est relié à un port d'entrée (6.1) d'une électrovanne à 2/2 voies (6), étant normalement ouverte à un fort débit d'air, ou au port d'entrée (12.1) d'une soupape à membrane à 3/4 voies, qui est commandé moyennant des électrovannes.

9. Ensemble de frein de stationnement électropneumatique selon la revendication 8, **caractérisé en ce que** ledit port de sortie (6.2) de ladite électrovanne à 2/2 vois (6), étant normalement ouverte et sous commande électronique, est relié audit port d'entrée (7.1) d'une électrovanne supplémentaire à 2/2 voies (7), en étant normalement fermé à un fort débit d'air (7.3), dans lequel son port de sortie (7.3) est relié à la pression atmosphérique.

10. Ensemble de frein de stationnement électropneumatique selon une quelconque des revendications précédentes, **caractérisé en ce qu'**une soupape de commande de remorque (9) est reliée audit port de sortie (8.2) d'une vanne sélectrice HAUT de façon, que ledit premier port d'entrée (8.11) soit alimenté en pression via ledit port de sortie (4.2) de ladite électrovanne de commande à 3/2 voies (4), pendant que ledit deuxième port d'entrée (8.12) soit alimenté en pression via ledit port de sortie (6.2) de ladite électrovanne (6) ou via ledit port de sortie (12.2) de ladite électrovanne (12).
